# EUROPÄISCHE PATENTSCHRIFT

(11) **EP 1 978 281 B1**
(45) Veröffentlichungstag und Bekanntmachung des Hinweises auf die Patenterteilung: **27.07.2011**
(21) Anmeldenummer: 07450066.1
(22) Anmeldetag: 03.04.2007
(51) Int. Cl.: F16G 15/02, F16G 13/14

(54) **Verbindungselement für ein Verbindungsglied**
Connecting element for a shackle
Elément de liaison pour un maillon de chaîne démontable

(43) Veröffentlichungstag der Anmeldung: 08.10.2008
(73) Patentinhaber: Pengg, Ägyd, 9020 Klagenfurt (AT)
(72) Erfinder: Pengg, Ägyd, 9020 Klagenfurt (AT)
(74) Vertreter: Patentanwaltskanzlei Matschnig & Forsthuber OG

(56) Entgegenhaltungen:
- DE-C- 853 538
- DE-U- 6 913 812
- GB-A- 311 049

## Beschreibung

Die Erfindung betrifft ein Verbindungselement gemäß dem Anspruch 1.

Weiters betrifft eine bevorzugte Form der Erfindung ein Verbindungsglied, welches zwei mittels eines Verbindungszapfens verbundene Verbindungselemente aufweist.

Verbindungsglieder der soeben erwähnten Art werden üblicherweise zur Verbindung von Ketten, Zurrmitteln etc. miteinander bzw. mit entsprechendem Zubehör, wie beispielsweise Haken, Schäkeln etc. verwendet.

Aus der EP 009 2382 ist ein Verbindungsglied bekannt geworden, welches ein erstes und ein zweites Verbindungselement aufweist, die je einen Scheitelabschnitt und sich von diesem erstreckende parallele Schenkel aufweisen. Die Endabschnitte der Schenkel sind mit einer Bohrung zur Aufnahme eines Verbindungszapfens ausgestattet, wobei die Enden des ersten Verbindungselementes von den Enden des zweiten Verbindungselement umfasst sind. Nachteilig an der bekannten Ausführungsform ist vor allem, dass es bauartbedingt erforderlich ist, zwei verschiedenartig ausgebildete Verbindungselemente zu verwenden, wodurch sich die Herstellungskosten wesentlich erhöhen. Darüber hinaus ist der Verbindungszapfen bauartbedingt großen Biegebelastungen unterworfen, wodurch sich Nachteile hinsichtlich der Festigkeitseigenschaften ergeben.

Ein Verbindungsglied der oben genannten Art, welches unter der Bezeichnung "Connex" bzw. aus der AT 001 926 U1 bekannt geworden ist, ist in Fig. 1 dargestellt. Dieses Verbindungsglied VER weist zwei miteinander verbundene Verbindungselemente VE1, VE2 mit einem im wesentlichen U-förmigen Querschnitt auf, wobei ein Ende EN1 eines Schenkels SC1 eines Verbindungselements VE1 eine Gabel bildet, in welche ein Endabschnitt EN2 eines Schenkels SC2 des anderen Verbindungselementes VE2 eingeführt werden kann. Die Endabschnitte EN1, EN2 weisen je eine Bohrung auf, durch welche in einem montierten Zustand ein Verbindungszapfen VBZ geführt ist. Nachteilig an diesem Verbindungsglied ist, dass es in der Fertigung sehr aufwendig ist, da die Teile geschmiedet werden müssen, um die geforderte Belastbarkeit zu erreichen.

Die DE 22 00 381 A zeigt ein Kettenverbindungsglied zum Herstellen einer lösbaren Verbindung von Rundgliederketten. Das bekannte Kettenverbindungsglied weist zwei einander gleiche Gliedhälften auf, von welchen jede aus einem Bügel mit einem Innenschenkel und einem Außenschenkel besteht. Die beiden Bügel sind über Verzahnungen der Innen und Außenbügel zusammen gehalten, wobei zusätzlich ein Sicherungsstift vorgesehen ist, der durch miteinander fluchtende, schräg zu einer Längsmittelebene verlaufende Bohrungen durch die Innen- und Außenschenkel der Gliedhälften geführt ist. Der Sicherungsstift hält jedoch die beiden Gliedhälften nicht zusammen, sondern dient lediglich dazu ein voneinander Lösen der Verzahnungen der Innen- und Außenbügel zu verhindern. Nachteilig an dieser Ausführungsform ist vor allem, dass sie aufgrund der Verzahnungen der Innen- und Außenbügel relativ aufwendig herzustellen ist.

Die DE 6913 812 zeigt ein zweiteiliges Kettenschloss. Jede Kettenschlosshälfte weist einen im Wesentlichen geraden und einen abgekröpften Schenkel auf, in denen Bohrungen angeordnet sind. Die Bohrungsachse verläuft dabei normal zu einer Längsmittelachse der Kettenschlosshälften. Die Fixierung der Kettenschlosshälften erfolgt mit einem durch die Schenkel gehenden Stift, um ein Verdrehen der Hälften um den Stift zu verhindern, sind die Schenkel jeweils paarweise ineinandergreifend konkav und konvex ausgeführt. Nachteilig an dieser Ausführung ist die aufwändige Fertigung.

Es ist daher eine Aufgabe der Erfindung, ein Verbindungsglied zu schaffen, welches auf einfache und kostengünstige Weise herzustellen ist und darüber hinaus günstigere Festigkeitseigenschaften aufweist als die bekannten Verbindungsglieder.

Diese Aufgabe wird mit einem Verbindungselement der eingangs genannten Art dadurch gelöst, dass die Bohrungen zueinander versetzt sind und geneigt zu einer Längsmittelgeraden des Verbindungselements verlaufen.

Es ist ein Verdienst der Erfindung, ein Verbindungselement zu schaffen, welches mit einem gleichartig ausgebildeten Verbindungselement mittels eines Verbindungszapfens zu einem Verbindungsglied zusammengebaut werden kann, wobei aufgrund des durch die geneigten Bohrungen schrägen Verlaufes des Verbindungszapfens die Biegebelastungen auf den Verbindungszapfen wesentlich verringert werden können.

Gemäß der Erfindung verläuft in montierten Zustand die Achse der Bohrungen zu der Längsmittelgerade des Verbindungselementes unter einem spitzen Winkel, der größer als der Reibungswinkel zwischen dem Verbindungszapfen und den Bohrungen ist.

Weitere Vorteile lassen sich dadurch erzielen, dass die Endbereiche, in welchen die Bohrungen angeordnet sind, je von geringerer Dicke sind als der die Endbereiche verbindender Abschnitt des Verbindungselements.

Die oben genannte Aufgabe kann auch mit einem Verbindungsglied der eingangs genannten Art gelöst werden, bei welchem die des Verbindungszapfens verbundenen Verbindungselemente je nach einem der Ansprüche 1 bis 4 ausgebildet sind.

Die Erfindung samt weiterer Vorteile wird im Folgenden anhand einiger nicht einschränkender Ausführungsbeispiele näher erläutert, die in der Zeichnung dargestellt sind. In dieser zeigen schematisch:
Fig. 2 ein erfindungsgemäßes Verbindungsglied in einer perspektivischen Ansicht und

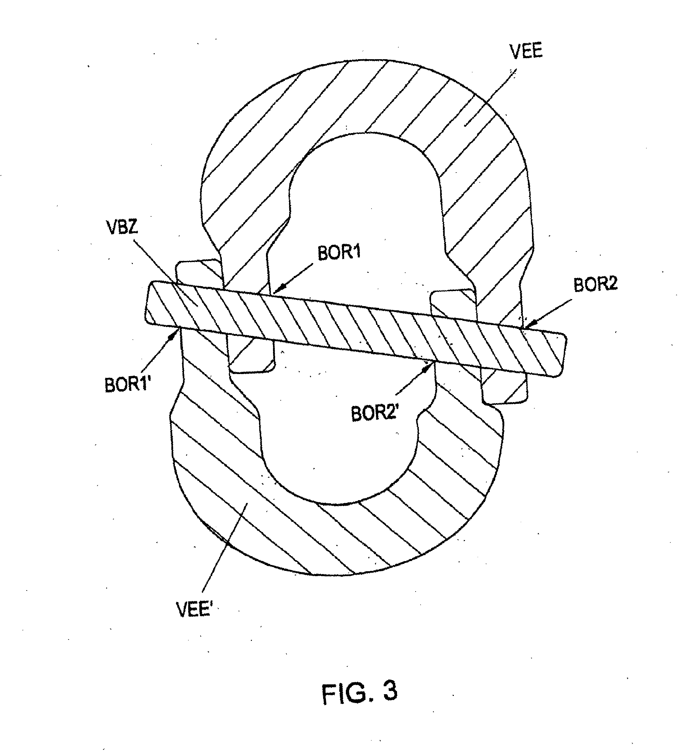

Fig. 3 einen Längsschnitt durch das Verbindungsglied aus Fig. 2.

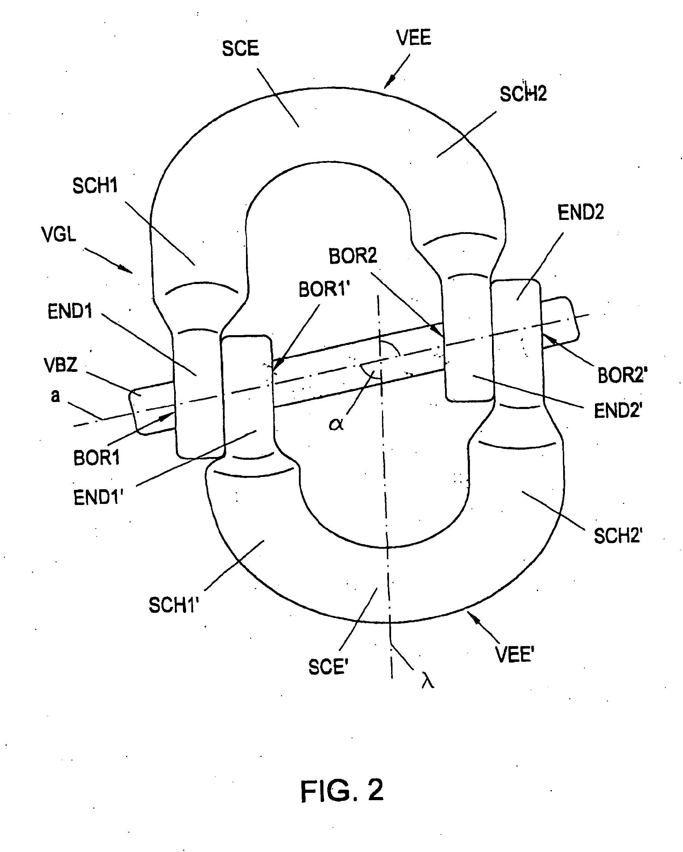

Gemäß Fig. 2 weist ein erfindungsgemäßes Verbindungsglied VGL zwei Verbindungselemente VEE, VEE' mit je einem im wesentlichen U-förmigen Querschnitt auf. Jedes Verbindungselement VEE, VEE' weist einen Scheitel SCE, SCE' und zwei sich von diesem erstreckende Schenkel SCH1, SCH2, SCH1', SCH2' auf. An jedem freien Enden END1, END2, END1' END2' der Schenkel SCH1, SCH2, SCH1', SCH2' ist eine Bohrung BOR1, BOR2, BOR1', BOR2' vorgesehen, wobei die Bohrungen BOR1, BOR2, BOR1', BOR2' eines Verbindungselemente VEE, VEE' gleichsinnig zueinander verlaufen. Weiters sind die Bohrungen BOR1, BOR2, BOR1', BOR2' eines Verbindungselementes VEE, VEE' in Richtung einer Längsmittelgeraden λ des Verbindungselementes VEE bzw. VEE' bzw. in Längsrichtung seiner Schenkel SCH1, SCH2, SCH1', SCH2' gegeneinander versetzt und verlaufen geneigt zu der Längsmittelgeraden λ.

Die beiden Verbindungselemente VEE, VEE' sind mittels eines Verbindungszapfens VBZ zu dem Verbindungsglied VGL zusammengefügt.

Die Achse a der Bohrungen BOR1, BOR2, BOR1', BOR2' verläuft unter einem spitzen Winkel α zu der Längsmittelgeraden λ des Verbindungselementes VEE bzw. VEE'. Der Winkel α ist hierbei größer als der Reibungswinkel zwischen dem Verbindungszapfen VBZ und den Bohrungen BOR1, BOR2, BOR1', BOR2'. Die beiden Schenkel SCH1, SCH2, SCH1', SCH2' jedes Verbindungselementes VEE, VEE' können unterschiedlich lang sein, wobei die Endbereiche END1, END2, END1', END2' eine geringere Dicke aufweisen als der zwischen den Endbereichen END1, END2, END1', END2' gelegene Abschnitt. Bevorzugterweise ist der Winkel α gerade so groß, dass ein Rutschen der Verbindungselemente VEE, VEE' gegenüber dem Verbindungszapfen VBZ möglich ist, da sich dadurch die Lastverteilung auf die Schenkel SCH1, SCH2, SCH1', SCH2' verbessern lässt.

Durch die geneigte Anordnung des Verbindungszapfens VBZ können die Endbereiche END1, END2, END1', END2' der Verbindungselemente VEE, VEE' aufeinander zurutschen, wodurch ein zwischen den Enden END1, END2, END1', END2' der beiden Verbindungselemente VEE, VEE' bei der Montage möglicherweise vorhandener Spalt automatisch geschlossen werden kann, wodurch sich auch die Fertigungstoleranzen bei einem erfindungsgemäßen Verbindungselement gegenüber den bekannten Verbindungselementen bzw. Verbindungsgliedern erhöhen.

Der Verbindungszapfen VBZ kann mittels eines hier nicht dargestellten Sicherungselementes, welches eine oder mehrere den Verbindungszapfen VBZ umfassende Sicherungshülsen aufweist, gegen ein axiales Verrutschen gesichert sein. Die Sicherungshülse bzw. die Sicherungshülsen ihrerseits können mittels einer in einer um den Verbindungszapfen VBZ laufenden Ringnut gelagerten Fixierfeder gegen ein Verrutschen entlang der Längsachse a des Verbindungszapfens VBZ gesichert sein.

Der Verbindungszapfen VBZ kann aber auch mittels eines aus der eingangs zitierten AT 001 926 U1 bekannt gewordenen Sicherungselementes gegen ein Herausrutschen geschützt sein.

Es hat sich herausgestellt, dass durch die erfindungsgemäße Lösung die auf den Verbindungszapfen VBZ wirkenden Belastungen wesentlich verringert werden können. Weiters kann auch die Gesamtfestigkeit des Verbindungsgliedes gegenüber den bekannten Verbindungsgliedern erhöht werden.

Darüber hinaus ist es von Vorteil, dass die Verbindungselemente VEE, VEE' als Drahtbiegeteile anstatt wie bisher üblich als Schmiedeteile gefertigt werden können, dadurch ergibt sich auch die Möglichkeit einer Nachkalibrierung der Verbindungselemente VEE, VEE'.

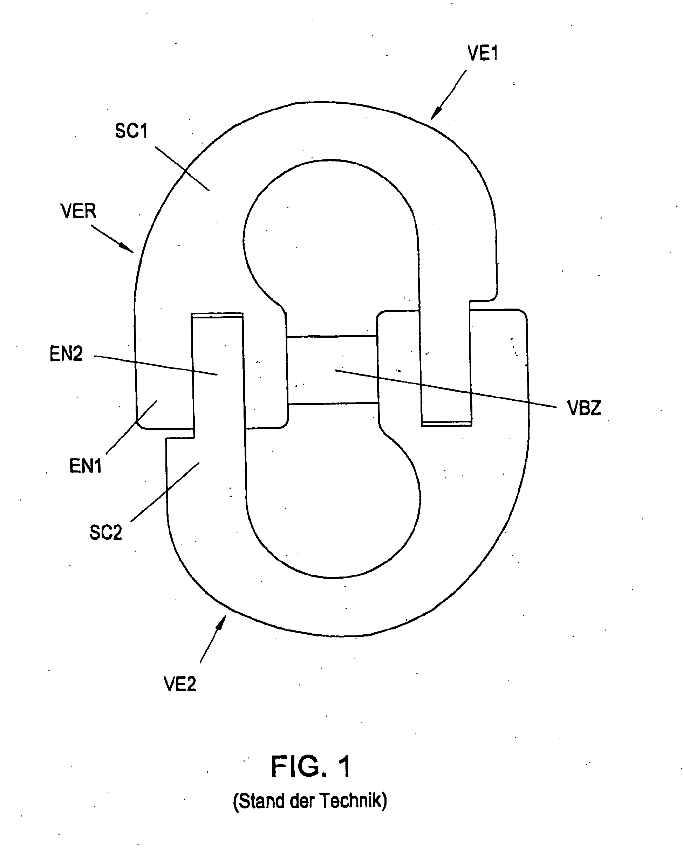

Natürlich können die freien Enden eines Verbindungselementes VEE, VEE' auch Gabelköpfe bilden, wie dies aus dem Stand der Technik (Fig.1) bekannt ist, wesentlich ist hierbei jedoch nur, dass der Verbindungsbolzen schräg verläuft. D. h., dass die Achse a der Bohrungen bzw. des Verbindungszapfens VBZ geneigt zu der Längsmittelgeraden λ des Verbindungsgliedes VEE' bzw. VEE verläuft.

## Patentansprüche

1. Verbindungselement (VEE, VEE') eines Verbindungsgliedes (VGL) für lasttragende Elemente, wie Ketten, Haken od. dgl., wobei das Verbindungselement (VEE, VEE') zwei im wesentlichen parallel zueinander verlaufende Schenkel (SCH1, SCH2, SCH1', SCH2') aufweist, deren freie Enden (END1, END2, END1', END2') je eine Bohrung (BOR1, BOR2, BOR1', BOR2') zur Aufnahme eines Verbindungszapfens (VBZ) aufweisen, mittels welchem das Verbindungselement (VEE) mit einem gleichartig ausgebildeten anderen Verbindungselement (VEE') zu dem Verbindungsglied (VGL) verbindbar ist, wobei die Verbindungselemente (VEE, VEE') nur durch den Verbindungszapfen (VBZ) zusammengehalten sind, und die Bohrungen (BOR1, BOR2, BOR1', BOR2') fluchtend verlaufen, wobei die Bohrungen (BOR1, BOR2, BOR1', BOR2') in Längsrichtung der Schenkel (SCH1, SCH2, SCH1', SCH2') des Verbindungselements (VEE, VEE') zueinander versetzt sind und geneigt zur Längsrichtung der Schenkel (SCH1, SCH2, SCH1', SCH2') des Verbindungselements (VEE, VEE') verlaufen, **dadurch gekennzeichnet, dass** in montierten Zustand die Achse (a) der Bohrungen (BOR1, BOR2, BOR1', BOR2') zur Längsrichtung der Schenkel (SCH1, SCH2, SCH1', SCH2') des Verbindungselementes (VEE, VEE') unter einem spitzen Winkel (α), der größer als der Reibungswinkel zwischen dem Verbindungszapfen (VBZ) und den Bohrungen (BOR1, BOR2, BOR1', BOR2') ist, verläuft.

2. Verbindungselement nach Anspruch 1, **dadurch gekennzeichnet, dass** die Schenkel (SCH1, SCH2, SCH1', SCH2') unterschiedlich lang sind.

3. Verbindungselement nach einem der Ansprüche 1 bis 2, **dadurch gekennzeichnet, dass** die Endbereiche (END1, END2, END1', END2'), in welchen die Bohrungen (BOR1, BOR2, BOR1', BOR2') angeordnet sind, je von geringerer Dicke sind als ein die Endbereiche (END1, END2, END1', END2') verbindender Abschnitt des Verbindungselements (VEE, VEE').

4. Verbindungsglied (VGL) für lasttragende Elemente, wie Ketten, Haken od. dgl., welches zwei mittels eines Verbindungszapfens (VGL) verbundene Verbindungselemente (VEE, VEE') aufweist, die je nach einem der Ansprüche 1 bis 3 ausgebildet sind.

## Claims

1. A coupling element (VEE, VEE') of a shackle (VGL) for load-carrying elements, such as chains, hooks, or the like, wherein the coupling element (VEE, VEE') has two substantially parallel legs (SCH1, SCH2, SCH1', SCH2'), whose free ends (END1, END2, END1', END2') have a bore (BOR1, BOR2, BOR1', BOR2') for the accommodation of a connecting bolt (VBZ), by means of which the coupling element (VEE) can be linked to another coupling element (VEE') of the same design to form the shackle (VGL), said coupling elements (VEE, VEE') being held together only by said connecting bolt (VBZ), which bores (BOR1, BOR2, BOR1', BOR2') extend in the same direction relatively to each other, wherein said bores (BOR1, BOR2, BOR1', BOR2') are out-of-line and extend at an angle to a longitudinal center line (λ) of said coupling element (VEE, VEE'), **characterized in that** in an assembled state the axis (a) of said bores (BOR1, BOR2, BOR1', BOR2') extends at an acute angle (α) to said longitudinal center line (λ) of said coupling element (VEE, VEE'), which angle is greater than the angle of friction between said connecting bolt (VBZ) and said bores (BOR1, BOR2, BOR1', BOR2').

2. The coupling element according to claim, **characterized in that** said legs (SCH1, SCH2, SCH1', SCH2') are of different lengths.

3. The coupling element according to any one of claims 1 to 2, **characterized in that** the end regions (END1, END2, END1', END2') in which said bores (BOR1, BOR2, BOR1', BOR2') are disposed, are each less thick than a region of said coupling element (VEE, VEE') that connects said end regions (END1, END2, END1', END2').

4. A shackle (VGL) for load-carrying elements, such as chains, hooks or the like, which has two coupling elements (VEE, VEE') connected by means of a connecting bolt (VGL), whenever said coupling elements are designed as defined in any one of claims 1 to 3.

## Revendications

1. Elément de liaison (VEE, VEE') d'un maillon de chaîne (VGL) pour des éléments porteurs de charge tels que des chaînes, des crochets ou similaires, l'élément de liaison (VEE, VEE') présentant deux branches (SCH1, SCH2, SCH1', SCH2') s'étendant sensiblement parallèlement l'une à l'autre, dont les extrémités libres (END1, END2, END1', END2') présentent chacune un perçage (BOR1, BOR2, BOR1', BOR2') destiné à recevoir un tenon de liaison (VBZ) permettant de relier l'élément de liaison (VEE) à un autre élément de liaison (VEE') réalisé de manière similaire pour former le maillon de chaîne (VGL), les éléments de liaison (VEE, VEE') n'étant maintenus ensemble que par le tenon de liaison (VBZ) et les perçages (BOR1, BOR2, BOR1', BOR2') s'étendant en alignement, les perçages (BOR1, BOR2, BOR1', BOR2') étant décalés les uns par rapport aux autres dans le sens longitudinal des branches (SCH1, SCH2, SCH1', SCH2') de l'élément de liaison (VEE, VEE') et s'étendant inclinés par rapport au sens longitudinal des branches (SCH1, SCH2, SCH1', SCH2') de l'élément de liaison (VEE, VEE'), **caractérisé en ce qu'**à l'état monté, l'axe (a) des perçages (BOR1, BOR2, BOR1', BOR2') s'étend par rapport au sens longitudinal des branches (SCH1, SCH2, SCH1', SCH2') de l'élément de liaison (VEE, VEE') selon un angle aigu (α) supérieur à l'angle de frottement entre le tenon de liaison (VBZ) et les perçages (BOR1, BOR2, BOR1', BOR2').

2. Elément de liaison selon la revendication 1, **caractérisé en ce que** les branches (SCH1, SCH2, SCH1', SCH2') présentent une longueur différente.

3. Elément de liaison selon l'une quelconque des revendications 1 à 2, **caractérisé en ce que** les zones d'extrémité (END1, END2, END1', END2'), dans lesquelles sont disposés les perçages (BOR1, BOR2, BOR1', BOR2'), présentent chacune une épaisseur moindre qu'une section de l'élément de liaison (VEE, VEE'), reliant les zones d'extrémité (END1, END2, END1', END2').

4. Maillon de chaîne (VGL) pour des éléments porteurs de charge tels que des chaînes, des crochets ou similaires, qui présente deux éléments de liaison (VEE, VEE') reliés à l'aide d'un tenon de liaison (VGL) et réalisés chacun selon l'une quelconque des revendications 1 à 3.
